# EUROPEAN PATENT APPLICATION

(11) **EP 3 447 605 A1**
(43) Date of publication of application: **27.02.2019**
(21) Application number: 18181735.4
(22) Date of filing: 04.07.2018
(51) Int. Cl.: G06F 1/16, G06F 3/0482, H04M 1/725, G06F 3/0488

(54) **DISPLAY LINKING SYSTEM**

(30) Priority: 21.08.2017 JP 2017158655
(71) Applicant: Westunitis Co., Ltd., Kita-ku Osaka-shi, Osaka 530-0011 (JP)
(72) Inventor: FUKUDA, Takahito, Osaka-shi, Osaka 5300011 (JP); KINOSHITA, Tadatoshi, Osaka-shi, Osaka 5300011 (JP)
(74) Representative: J A Kemp

(57) **Abstract**

The invention provides a system that can use processing capacity of a smartphone or the like and can display a predetermined part of a screen that displays the processing result on an HMD. Vertically-long image data 23 is changed to horizontally-long output image data 31 and is then output from an output section 24. A part of the vertically-long output image data 23 (in this example, one third thereof on an upper side) is an overlapping display region 25. This overlapping display region 25 is a region that is displayed on a head-mounted display (HMD) 6. A converter 4 receives the horizontally-long output image data 31, converts this to HDMI data, and identifies a central portion 33 that corresponds to the vertically-long image data 23. Furthermore, the converter 4 extracts an overlapping display region 35 from this central portion 33, the overlapping display region 35 corresponding to the overlapping display region 25 of the vertically-long image data 23. The converter 4 outputs data on the extracted overlapping display region 35 as HMD display data 40 for the HMD 6. The HMD 6 displays the received HMD display data 40.

## Description

The invention relates to a display linking system that links equipment having a display function such as a smartphone to a head-mounted display for a display.

A touchscreen display is adopted for equipment such as a smartphone, and a user performs an operation by touching a screen. When a head-mounted display (HMD) is connected to an image output of this smartphone, the smartphone screen can be displayed on the HMD.

Thus, the user can perform the operation on the smartphone screen and can check the screen on the HMD.

As a system that links equipment having a display function such as the smartphone to the HMD for a display, systems as disclosed in JP-B-5630141 and JP-A-2003-279881 have been proposed.

In JP-B-5630141, it is described that a part of the smartphone screen is selected and a selected area of the screen is displayed on the HMD. The part of the smartphone screen is selected by the user.

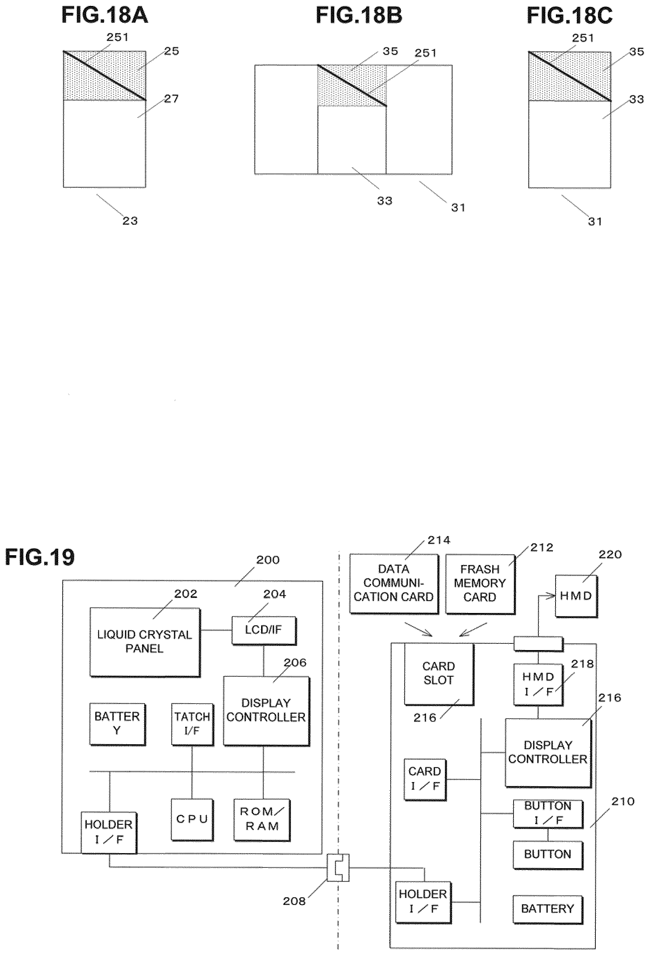

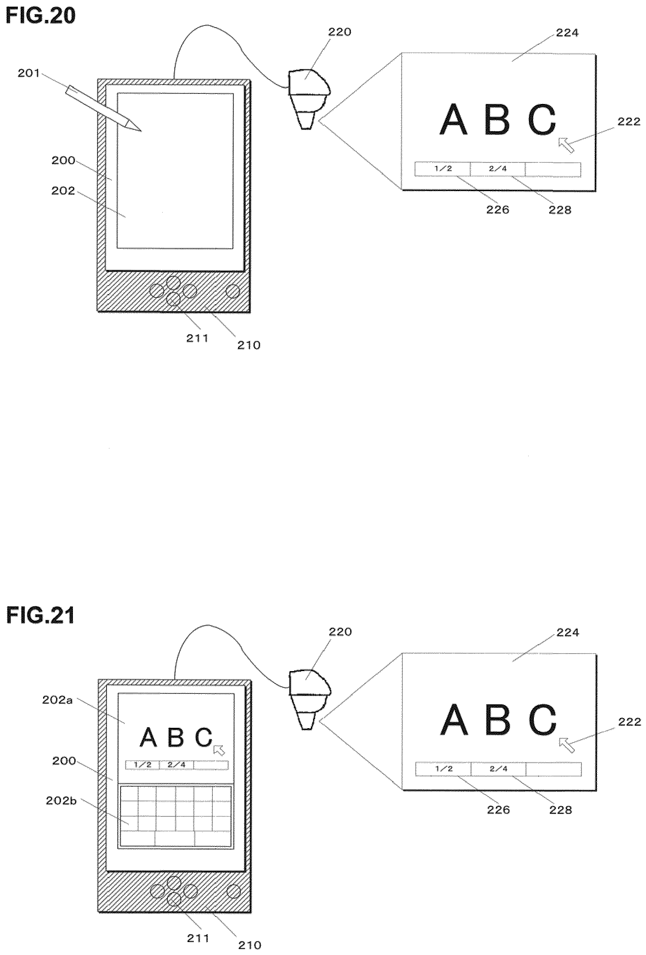

In JP-A-2003-279881, as shown in FIG. 20, a holder 210 (a shaded portion in the drawing) that is attached to a personal digital assistant (PDA) 200 is disclosed. FIG. 19 shows a circuit block thereof. An HMD 220 is connected to the holder 210. Not display data from the PDA 200 but display data from a flash memory card 212 that is attached to the holder 210 is displayed on this HMD 220.

FIG. 20 shows a display example on the HMD 220. The display data recorded in the flash memory card 212 is displayed ("ABC" in the drawing). In addition, a cursor 222 and display switching buttons 226, 228 for the operation are displayed.

A liquid crystal panel 202 of the PDA 200 that is accommodated in the holder 210 functions not as a display but as a touchpad used to move the cursor 222. That is, the cursor 222 on the HMD 220 can be moved by a stylus 201.

When the cursor 222 is moved and the display switching button 226 is double-clicked (double-tapped by the stylus 201) from this state, a display mode is changed to that shown in FIG. 21. When the display switching button 226 is clicked, the liquid crystal panel 202 of the PDA 200 is divided into an upper region 202a and a lower region 202b. The display data for the HMD 220, which is recorded in the flash memory 212 in the holder 210, is compressed for the liquid crystal panel 202 of the PDA 200. The compressed display data is displayed in the upper region 202a of the PDA 200. A virtual keyboard is displayed in the lower region 202b of the PDA 200. It is described that not only the display data recorded in the flash memory 212 but also input data from the virtual keyboard are displayed in the upper region 202a. However, specific processing is not described.

As described so far, the liquid crystal panel 202 of the PDA 200 can be linked to the HMD 220 for the display.

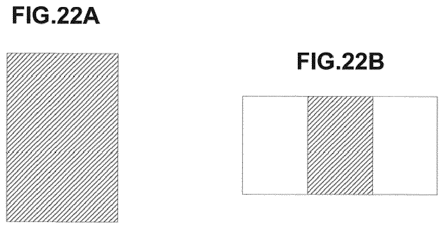

However, when smartphone screen data is output to the outside, as shown in FIGs. 22A and 22B, the smartphone screen data is often output in a state where an entire screen configuration is changed. FIG. 22A shows the smartphone screen data, and FIG. 22B shows screen data output from the smartphone. Because the smartphone screen is vertically long and the HMD screen is horizontally long, a shaded portion in FIG. 22B corresponds to the smartphone screen data.

Thus, in order to link the screen such as that of the smartphone to the HMD screen, such a difference in image data configuration has to be considered; otherwise, an appropriate linked display cannot be realized. That is, the appropriate linked display cannot be realized unless size conversion, vertical/horizontal rotation, and the like are not performed.

In JP5630141 B, a difference in the screen configuration as described above is not considered, and thus there is a possibility that the appropriate linked display cannot be realized. In addition, since the part of the screen that is selected on the smartphone by the user is displayed on the HMD, it is impossible to acknowledge which part of the screen is selected in advance.

Accordingly, there is a problem that it is difficult for an application in the smartphone to determine the region to be displayed on the HMD and execute processing that corresponds thereto. For example, there is a problem incapable of creating an application that sets a specified region on the smartphone as an operation region in advance, sets the other region thereon as a region for displaying an operation result, and only displays the other region on the HMD.

In JP2003279881A, the display data is not generated on the PDA 200 side, and the display data recorded in the flash memory card 212 in the holder 210 is displayed on the HMD 220. In addition, this display data is compressed for the crystal panel 202 and displayed on the PDA 200.

Just as described, the system disclosed in JP2003279881A does not achieve the display on the HMD 220 on the basis of the display data generated on the PDA side or the smartphone side. Thus, such linking is not assumed that the processing is executed by using capacities of the PDA, the smartphone, and the like and the part of the crystal panel 202 showing the processing result is displayed on the HMD 220. That is, there is a problem that a display linking system sufficiently using the capacities of the PDA and the smartphone cannot be provided.

The invention has purposes of solving problems as described above and providing a system capable of an appropriate linked display in consideration of a difference in screen configuration between a smartphone and an HMD.

The invention also has a purpose of providing a system that facilitates development of a smartphone application by using a processing capacity of a smartphone or the like and causing a predetermined part of a screen showing the processing result to be displayed on an HMD.

The invention further has a purpose of providing a system capable of recognizing a command properly when the command is provided by speech input.

The invention has a purpose of providing a system that solves at least one of the above problems.

Several features of the invention, each of which is independently applicable, will be listed below.
(1), (2) A display linking system according to the invention is a display linking system that includes: a mobile terminal including: a touch display that allows touch input; and an output section that outputs vertically-long display data displayed on the touch display as external output display data corresponding to a horizontally-long HMD screen; a converter that receives the external output display data from the output section and generates horizontally-long HMD display data to be displayed on a head-mounted display (HMD); and the head-mounted display that is connected to the converter and receives and displays the HMD display data. A partial region that is a specified partial region of the touch display and that corresponds to the horizontally-long HMD screen is set as an overlapping display region. Of a region that corresponds to the vertically-long display data included in a central portion of the received external output display data, the converter extracts display data of the overlapping display region so as to generate the HMD display data.
   Accordingly, while a function of the mobile terminal is used, the part of the screen thereof can be linked to be displayed on the HMD.
(3) In the system according to the invention, the mobile terminal includes a fixing means that fixes a switching means switching the touch display between vertically-long display and horizontally-long display to the vertically-long display.
   Accordingly, regardless of a screen direction of the mobile terminal, the display can stably be linked.
(4) In the system according to the invention, display for the touch input is not provided in the overlapping display region of the touch display of the mobile terminal.
   Accordingly, the display linking with minimum waste can be realized.
(5), (6) A mobile terminal according to the invention is a mobile terminal that includes: a touch display that allows touch input; an output means that outputs vertically-long display data displayed on the touch display as external output display data corresponding to a horizontally-long HMD screen; and a conversion means that receives the external output display data from the output means and generates horizontally-long HMD display data to be displayed on a head-mounted display (HMD). A partial region that is a specified partial region of the touch display and that corresponds to the horizontally-long HMD screen is set as an overlapping display region. Of a region that corresponds to the vertically-long display data included in a central portion of the received external output display data, the conversion means extracts display data of the overlapping display region so as to generate the HMD display data.
   Accordingly, display can be linked without using a converter.
(7) In the mobile terminal according to the invention, the conversion means fixes a switching means switching the touch display between vertically-long display and horizontally-long display to the vertically-long display.
   Accordingly, regardless of a screen direction of the mobile terminal, the display can stably be linked.
(8) In the mobile terminal according to the invention, display for the touch input is not provided in the overlapping display region of the touch display of the mobile terminal.
   Accordingly, the display linking with minimum waste can be realized.
(9), (10) A display linking system according to the invention is a display linking system that includes: a mobile terminal including: a touch display that allows touch input; and an output section that externally outputs display data displayed on the touch display as external output display data; a converter that receives the external output display data from the output section and generates HMD display data to be displayed on a head-mounted display (HMD); and the head-mounted display that is connected to the converter and receives and displays the HMD display data. A partial region that is a specified partial region of the touch display and that corresponds to an HMD screen is set as an overlapping display region. The converter converts the external output display data to the HMD display data on the basis of a combination of a model of the mobile terminal and a model of the head-mounted display, each of which is connected thereto.
   Accordingly, in accordance with the models of the mobile terminal and the head-mounted display, while a function of the mobile terminal is used, the part of the screen thereof can be linked to be displayed on the HMD.
(11) In the system according to the invention, in the case where either one of the model of the connected mobile terminal and the connected head-mounted display is determined in advance, the external output display data is converted to the HMD display data on the basis of the model of the other.
   Accordingly, the display can appropriately be linked in accordance with the models.
(12) In the system according to the invention, in the case where the display data becomes vertically-long display data due to the combination of the model of the mobile terminal and the model of the head-mounted display and the external output display data corresponds to the horizontally-long HMD screen as a whole that includes the vertically-long display data in a central portion thereof, of a region that corresponds to the vertically-long display data included in the central portion of the received external output display data, a converter extracts display data of the overlapping display region so as to generate the HMD display data.
   Accordingly, while a function of the mobile terminal is used, the part of the screen thereof can be linked to be displayed on the HMD.
(13), (14) A mobile terminal according to the invention is a mobile terminal that includes: a touch display that allows touch input; an output means that externally outputs display data displayed on the touch display as external output display data; and a conversion means that receives the external output display data from the output means and generates HMD display data to be displayed on a head-mounted display (HMD). A partial region that is a specified partial region of the touch display and that corresponds to an HMD screen is set as an overlapping display region. The conversion means converts the external output display data to the HMD display data on the basis of a combination of a model of the mobile terminal and a model of the head-mounted display, each of which is connected thereto.
   Accordingly, in accordance with the models of the mobile terminal and the head-mounted display, while a function of the mobile terminal is used, the part of the screen thereof can be linked to be displayed on the HMD. (15) In the terminal according to the invention, in the case where either one of the model of the connected mobile terminal and the connected head-mounted display is determined in advance, the external output display data is converted to the HMD display data on the basis of the model of the other.
   Accordingly, the display can appropriately be linked in accordance with the models.
(16) In the mobile terminal according to the invention, in the case where the display data becomes vertically-long display data due to the combination of the model of the mobile terminal and the model of the head-mounted display and the external output display data becomes HDMI data that corresponds to the horizontally-long HMD screen as a whole including the vertically-long display data in a central portion thereof, of a region that corresponds to the vertically-long display data included in the central portion of the received HDMI data, a converter extracts display data of the overlapping display region so as to generate the HMD display data.
   Accordingly, in accordance with the models of the mobile terminal and the head-mounted display, while a function of the mobile terminal is used, the part of the screen thereof can be linked to be displayed on the HMD.
(17), (18), (19), (20) A display linking system according to the invention is a display linking system that includes: a mobile terminal including: a touch display that allows touch input; and an output section that externally outputs display data displayed on the touch display as external output display data; a converter that receives the external output display data from the output section and generates HMD display data to be displayed on a head-mounted display (HMD); and the head-mounted display that is connected to the converter and receives and displays the HMD display data. A partial region that is a specified partial region of the touch display and that corresponds to an HMD screen is set as an overlapping display region. The mobile terminal generates display data for initial setting in which the overlapping display region and the other region can be distinguished from each other, and outputs external output display data for the initial setting that corresponds thereto during the initial setting. During the initial setting, the converter receives the external output display data for the initial setting, recognizes the overlapping display region in the data, and establishes a conversion procedure of the external output display data to the HMD display data.
   Accordingly, regardless of a model of the mobile terminal and the like, the display can automatically be linked to the HMD.
(21), (22) A mobile terminal according to the invention is a mobile terminal that includes: a touch display that allows touch input; an output means that externally outputs display data displayed on the touch display as external output display data; and a conversion means that receives the external output display data from the output means and generates HMD display data to be displayed on a head-mounted display (HMD). A partial region that is a specified partial region of the touch display and that corresponds to an HMD screen is set as an overlapping display region. The mobile terminal generates display data for initial setting in which the overlapping display region and the other region can be distinguished from each other, and outputs external output display data for the initial setting that corresponds thereto during the initial setting. During the initial setting, the conversion means receives the external output display data for the initial setting, recognizes the overlapping display region in the data, and establishes a conversion procedure of the external output display data to the HMD display data.
   Accordingly, regardless of a model of the mobile terminal and the like, the display can automatically be linked to the HMD without using a converter.
(23), (24) A speech recognition device according to the invention is a speech recognition device that includes: a screen data generation means that generates screen data to be displayed in a display section; a command recognition means that receives speech data and recognizes a corresponding command; and a command execution means that executes the recognized command. The screen data generation means generates the screen data that includes text of the speech data corresponding to an acceptable command on a screen, and the command recognition means selects a command that corresponds to the speech data from the acceptable commands and recognizes the command.
   Accordingly, the speech commands that are available for a user are obvious, and the device can easily recognize the command by speech recognition.
(25), (26) A speech recognition device according to the invention is a speech recognition device that includes: a screen data generation means that generates screen data to be displayed in a display section; a command recognition means that receives speech data and recognizes a corresponding command; and a command execution means that executes the recognized command. The screen data generation means generates the screen data that shows a speech waveform of the input speech data as well as a line that serves as an indicator of recognizable voice level by the command recognition means.
   Accordingly, the user can easily recognize the appropriate voice level when inputting the speech command.

In the invention, step S11 and step S31 in the embodiments correspond to the "image direction fixing means".

The "input/output port 24" in the embodiments correspond to the "output section".

Step S32 in the embodiments corresponds to the "initial image output means".

Steps S42, S43 in the embodiments correspond to the "conversion procedure establishment means".

Step S2 in the embodiment corresponds to the "conversion means".

A "program" is a concept that includes not only a program directly executable by a CPU but also a source program, a compressed program, an encrypted program, and the like.

The invention will be described by way of example with reference to the accompanying drawings, in which:
FIG. 1 shows an overall configuration of a display linking system according to one embodiment of the invention;
FIG. 2 shows a system configuration of the display linking system;
FIG. 3 shows a hardware configuration of a smartphone 2;
FIG. 4 shows a hardware configuration of a converter 4;
FIG. 5A is a display screen of the smartphone 2, and FIG. 5B is a display screen of an HMD 6;
FIG. 6 is a flowchart of a conversion program;
FIG. 7A shows display image data, FIG. 7B shows output image data, and FIG. 7C shows HMD image data;
FIG. 8 is a flowchart of a terminal program;
FIG. 9 is a flowchart of the terminal program;
FIGs. 10A, 10B, 10C each show a screen example of an example in which the display linking system according to the first embodiment is applied to a work navigation system;
FIG. 11 shows a screen example of the work navigation system;
FIG. 12 shows another screen example of the work navigation system;
FIG. 13 shows yet another screen example of the work navigation system;
FIG. 14 shows further another screen example of the work navigation system;
FIG. 15A shows output image data that is output from the smartphone 2 in a horizontal screen mode, FIG. 15B shows HMD display data, and FIGs. 15C, 15D, 15E each show examples of a smartphone screen and an HMD screen;
FIG. 16 shows an overall configuration of a display linking system according to a second embodiment;
FIG. 17 is a flowchart during initial setting;
FIG. 18A shows initial setting image data, FIGs. 18B and 18C each show output image data thereof, and FIG. 18D shows an example of the output image data of the smartphone;
FIG. 19 is a block diagram of a conventional system;
FIG. 20 is a view of an operation of the conventional system;
FIG. 21 is another view of the operation of the conventional system; and
FIG. 22A is a smartphone display image, and FIG. 22B shows an example of output image data.

### 1. First Embodiment

### 1.1 Overall Configuration

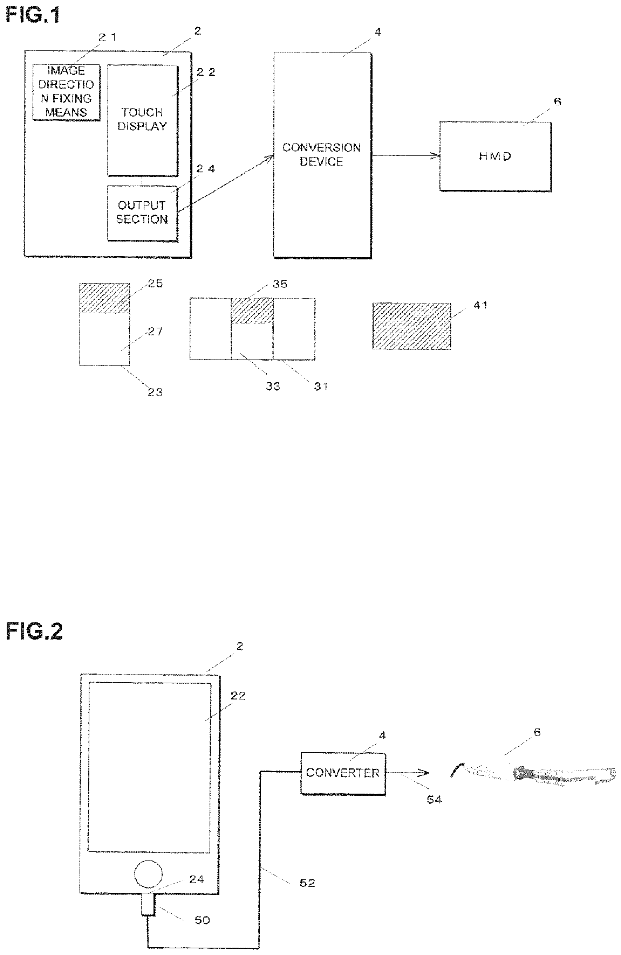

FIG. 1 is a functional block diagram of a display linking system according to one embodiment of the invention. A smartphone 2 as a mobile terminal includes a touch display 22 that allows touch input. The smartphone 2 includes an acceleration sensor (not shown) that detects a direction of gravity, and switches between vertically-long image data (image data in an appropriate direction that is displayed when a screen is vertically long) and horizontally-long image data (image data in the appropriate direction that is displayed when the screen is horizontally long) for the display in accordance with a direction of the screen. However, the smartphone 2 is fixed by an image direction fixing means 21 to a mode in which vertically-long image data 23 is displayed regardless of the direction of the screen.

The vertically-long image data 23 is changed to horizontally-long output image data 31 and is then output from an input/output port 24. A central portion 33 of the horizontally-long output image data 31 corresponds to the vertically-long image data 23. In addition, a part of the vertically-long image data 23 (in this example, one third thereof on an upper side) is an overlapping display region 25. This overlapping display region 25 is a region that is displayed on a head-mounted display (HMD) 6.

A converter 4 receives the horizontally-long output image data 31 and identifies the central portion 33 that corresponds to the vertically-long image data 23. Furthermore, the converter 4 extracts an overlapping display region 35 from this central portion 33, the overlapping display region 35 corresponding to the overlapping display region 25 of the vertically-long image data 23. The converter 4 outputs data on the extracted overlapping display region 35 as HMD display data 41 for the HMD 6. The HMD 6 displays the received HMD display data 41.

In the smartphone 2, a processing program is described under a precondition that the overlapping display region 25, which is displayed on the touch display 22, is also displayed on the HMD 6 while a lower region 27 is only displayed on the smartphone 2. For example, when an operation button or the like is displayed in the lower region 27, command input or the like can be made by operating this. The processing program is also described such that a processing result and the like are displayed in the overlapping display region 25. Meanwhile, the HMD display data 41, which has the same contents as that displayed in the overlapping display region 25, is displayed on the HMD 6.

Thus, a user can perform an operation on the touch display 22 of the smartphone 2 and displays an operation result on the HMD 6.

### 1.2 System Configuration · Hardware Configuration

FIG. 2 shows a system configuration of the display linking system according to the one embodiment of the invention. This system includes the smartphone 2, the converter 4, and the head-mounted display (HMD) 6.

A cable 52 is connected to a connector terminal (an input/output port 24) of the smartphone 2 via a connector 50. The cable 52 is connected to an input port 47 of the converter 4. Output of the converter 4 is received by the HMD 6. Note that picoLinker® of WESTUNITIS CO., LTD. can be used as the HMD 6.

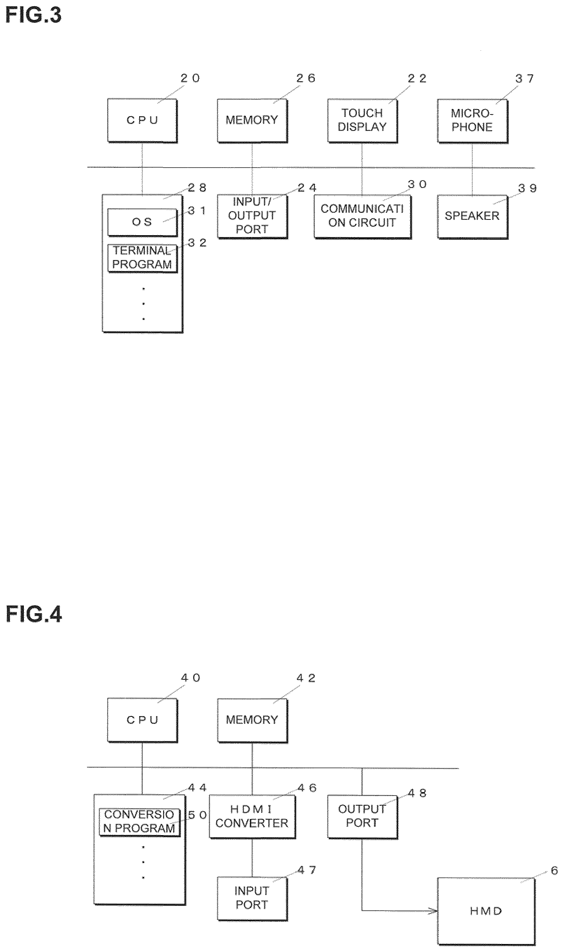

FIG. 3 shows a hardware configuration of the smartphone 2. Memory 26, the touch display 22, non-volatile memory 28, the input/output port 24, a communication circuit 30, a microphone 37, and a speaker 39 are connected to a CPU 20. Note that a talking circuit and the like are not shown in FIG. 3.

The touch display 22 displays the image data and receives the user's input. The input/output port 24 is a port that at least output the output image data. A Lightning® connector of an iPhone® corresponds thereto. A micro USB connector of an Android® terminal corresponds thereto. The communication circuit 30 communicates with the Internet. The microphone 37 acquires the user's operation as voice. The speaker 39 outputs an instruction and the like to the user.

A terminal program 32 is installed on the non-volatile memory 28. This terminal program 32 is downloaded from a website on the Internet via the communication circuit 30.

FIG. 4 shows a hardware configuration of the converter 4. Memory 42, non-volatile memory 44, an HDMI converter 46, and an output port 48 are connected to a CPU 40. The HMD 6 is connected to the output port 48. The cable 52 is connected to the HDMI converter 46 via the input/output port 47. Accordingly, the output image data from the smartphone 2 is converted to HDMI data and loaded onto the converter 4. A conversion program 50 is recorded in the non-volatile memory 44. Although not shown, a battery for driving the converter 4 is provided.

### 1.3 Display Linking Processing

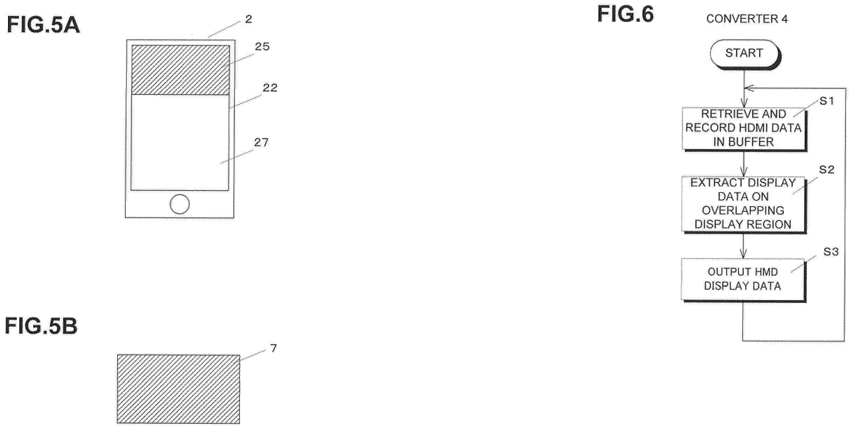

In this embodiment, as shown in FIG. 5A, the smartphone 2 has the vertical screen, and an upper region of the touch display 22 is set as the overlapping display region 25. This overlapping display region 25 is a region for the display. Only this overlapping display region 25 is displayed in an entire display region 7 (FIG. 5B) of the HMD 6. The lower region 27 of the touch display 22 is a region for the display and the operation input. This lower region 27 is not displayed on the HMD 6.

Accordingly, the application of the smartphone 2 displays the contents to be displayed on the HMD 6 in the predetermined overlapping display region 25 and displays the contents that should only be displayed on the smartphone 2 in the lower region 27.

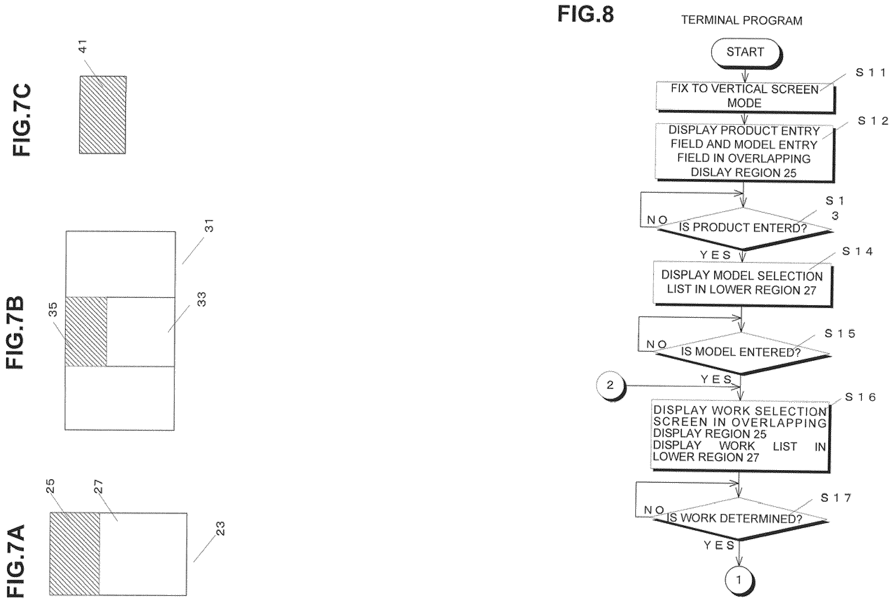

FIG. 6 is a flowchart of the conversion program 50 in the converter 4. The CPU 40 in the converter 4 (hereinafter may be abbreviated as the converter 4) retrieves the HDMI data, to which the output image data received from the input/output port 47 is converted (step S1). FIG. 7A shows the image data that is displayed on the touch display 22 of the smartphone 2. A shaded portion is a portion that is set as the overlapping display region 25. FIG. 7B shows that the output image data, which is output from the input/output port 24 of the smartphone 2, is converted to the HDMI data.

The CPU 40 records the retrieved HDMI data in the memory 42 (a buffer) (step S1). The CPU 40 identifies and extracts the overlapping display region 35 from the central portion 33 of the horizontally-long HDMI data (step S2). Note that, in this embodiment, the overlapping display region 25 in the image data 23 of the smartphone 2, which is shown in FIG. 7A, is defined in advance. In addition, a conversion ratio of the vertically-long image data in FIG. 7A to the horizontally-long HDMI data in FIG. 7B is known. Accordingly, the CPU 40 can identify the overlapping display region 35 from the central portion 33 in FIG. 7B.

The CPU 40 outputs the thus-extracted data on the overlapping display region 35 as the HMD display data 41 from the output port 48 (step S3).

As described so far, only the overlapping display region 25 of the touch display 22 in the smartphone 2 can be displayed on the HMD 6.

Note that, as described above, the CPU 40 executes image data extraction processing; however, an FPGA or the like may partially or entirely execute the image data extraction processing.

A description will hereinafter be made on a terminal program 32 that instructs the user who holds the smartphone 2 and wears the HMD 6 on work as an example. FIG. 8 is a flowchart of the terminal program 32.

The CPU 20 in the smartphone 2 turns off a vertical/horizontal automatic switching function of the touch display 22 and fixes the touch display 22 in a vertical screen mode (step S11). The smartphone 2 has a function of detecting posture of the smartphone 2 by using a sensor that detects gravitational acceleration (not shown) and switching between the vertical screen mode and a horizontal screen mode. Here, this switching function is turned off, and the touch display 22 is fixed to the vertical screen mode regardless of the posture of the smartphone 2. This is done for a purpose of fixing the output image data because the output image data that is output from the input/output port 24 in the vertical screen mode differs from the output image data that is output from the input/output port 24 in the horizontal screen mode.

The CPU 20 displays a product input field 60 and a model input field 62 in the overlapping display region 25 and displays a list of products, one of which should be input in the product input field 60, in the lower region 27 (step S12). Thus, the product input field 60 and the model input field 62 are displayed on the HMD 6. The user operates the touch display 22 and selects a work target product as from the lower region 27 (step S13).

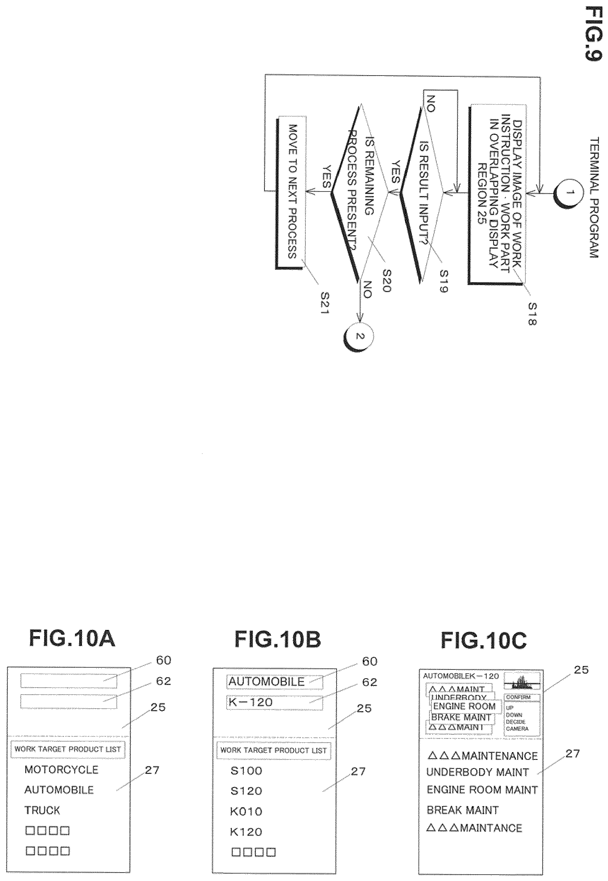

Once the work target product is selected, the CPU 20 displays a selected product name in the product input field 60 and displays a list of models, one of which should be input in the model input field 62, in the lower region 27 (step S14). A display example is shown in FIG. 10B. The user operates the touch display 22 and selects a work target model from the lower region 27 (step S15).

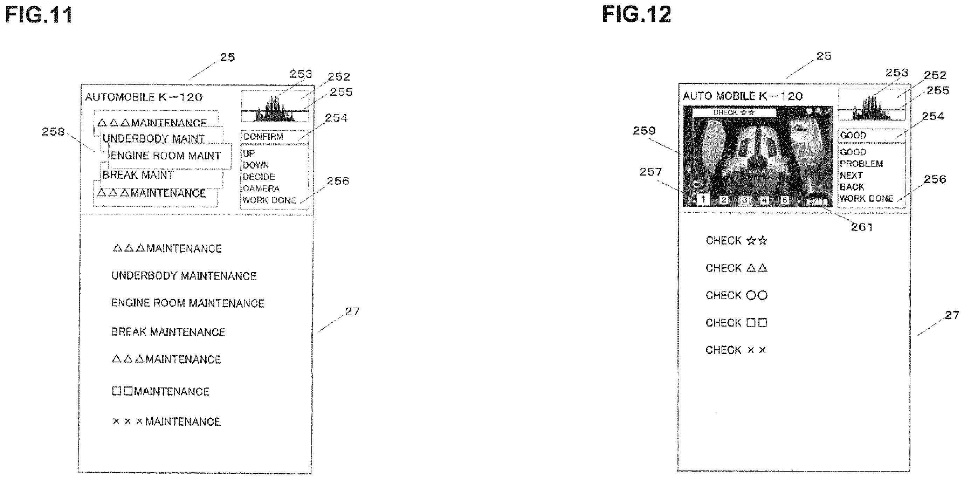

As described so far, once the product name and the model name as the work target are confirmed, the CPU 20 displays a work content selection screen as shown in FIG. 10C for the product and the model (step S16). FIG. 11 shows the work content selection screen in detail. A selection region 258 in which a work content is selected is displayed in the overlapping display region 25.

In the selection region 258, the work content of the confirmed product "AUTOMOBILE" and the confirmed model "K-120" is displayed. In a central portion of the selection region 258, the candidate work content "ENGINE ROOM MAINTENANCE" is displayed. When a confirmation command is input in this state, "ENGINE ROOM MAINTENANCE" is selected and confirmed as the work content.

In this embodiment, when the user says "confirm", the microphone 37 catches this user's speech, and the CPU 20 recognizes this as the confirmation command by a speech analysis (speech-to-text). The command may be input by a method other than voice input such as pressing of the operation button.

In the case where the work content other than "ENGINE ROOM MAINTENANCE" is selected, an "UP" command or a "DOWN" command is input by voice. For example, when the "UP" command is input in a state shown in FIG. 11, "BRAKE MAINTENANCE" hiding on a lower side of "ENGINE ROOM MAINTENANCE" is positioned in the central portion and becomes the candidate. When the "DOWN" command is input, "UNDERBODY MAINTENANCE" hiding on an upper side of "ENGINE ROOM MAINTENANCE" is positioned in the central portion and becomes the candidate.

In this embodiment, the commands, each of which can be input by voice, are displayed in a possible command display region 256 of the overlapping display region 25. In FIG. 11, "UP", "DOWN", "CONFIRM", "CAMERA", and "WORK DONE" are displayed. That is, in this screen, only these voice commands are accepted. Acceptable voice commands are prepared for each of the screens.

With such a configuration, the user who inputs the command by voice can understand that the commands displayed in the possible command display region 256 are only accepted, and thus the user can say the correct command. In addition, because the commands that can be input in the screen are narrowed, speech recognition by the CPU 20 is facilitated. Furthermore, because the possible command display region 256 is provided in the overlapping display region 25, the possible command display region 256 is also displayed on the HMD 6. Thus, the user can easily check the commands.

The command that is said by the user and is correctly recognized is displayed in a recognized command display field 254. FIG. 11 shows that the "CONFIRM" command is recognized.

A speech waveform window 252 is provided in the overlapping display region 25. The CPU 20 converts the speech received from the microphone 37 to a digital signal and displays the digital signal as a speech waveform 253 in this speech waveform window 252. At this time, a required voice level for the speech recognition is also displayed as a line 255. The line 255 is provided to indicate the required voice level for the correct speech recognition. Accordingly, when the user says the command, the user looks at the speech waveform 253 and can adjust the voice level such that the voice level exceeds the line 255.

When the user does not say anything, environmental noise (peripheral noise) is displayed as the waveform. In the case where the waveform at this time exceeds the line 255, the environmental noise is too loud for the CPU 20 to perform the correct speech recognition. To handle this problem, the user can manually or automatically adjust volume of the microphone 37 (hardware-wise or software-wise) such that the environmental noise sufficiently falls below the line 255.

In FIG. 11, the CPU 20 displays a list of the work contents in the lower region 27. Because the lower region 27 is larger than the overlapping display region 25, the longer list of the work contents than that in the overlapping display region 25 can be displayed in the lower region 27. However, the lower region 27 is only displayed on the smartphone 2.

The user looks at the screen on the HMD 6 and determines the work content by the speech (step S17). Note that the selection of the work content in steps S16, S17 may be performed plural times (in plural hierarchies).

Once the work content is selected and determined, the CPU 20 displays a list of processes in the determined work content in the lower region 27, and also displays a work instruction screen that shows a work instruction "CHECK **" and an image 259 prepared in advance for a work target part in the overlapping display region 25 (step S18). Furthermore, the CPU 20 outputs the instruction content as the speech from the speaker 39. FIG. 12 shows the work instruction screen.

The user receives this work instruction and performs the work with reference to the image 259 that shows the work part and the work content. This image is displayed on the HMD 6. Process numbers 257 in this work content are shown at a bottom of the image 259, and only the current process number is enlarged. In FIG. 12, while the process numbers "1" to "5" are displayed, only "1" is enlarged, and thus it is indicated that the current process is numbered as "1".

In addition, a cycle time 261 is displayed at a lower right corner. The cycle time is a processing time of the process. The denominator of the cycle time is set in advance, and the numerator indicates a time spent to the present time. In the drawing, 3/11 is shown, and it is indicated that 3 seconds have elapsed from the initiation of this process that is planned to be completed in 11 seconds.

Once the instruction content of the process is completed, the user inputs the speech command. The current process is the checking process. Thus, if a result of the check is OK, the speech command of "GOOD" is input. On the other hand, if the result of the check is NG, the speech command of "PROBLEM PRESENT" or the like is input (step S19). In the example shown in FIG. 12, "GOOD" is input.

The CPU 20 records this input result in a manner that this input result corresponds to the process. The CPU 20 also records the cycle time. The CPU 20 determines whether there is an unprocessed process of the selected work (step S20). If the unprocessed process is present, the processing proceeds to the next step, and the processing in step S18 onward is repeated (step S21).

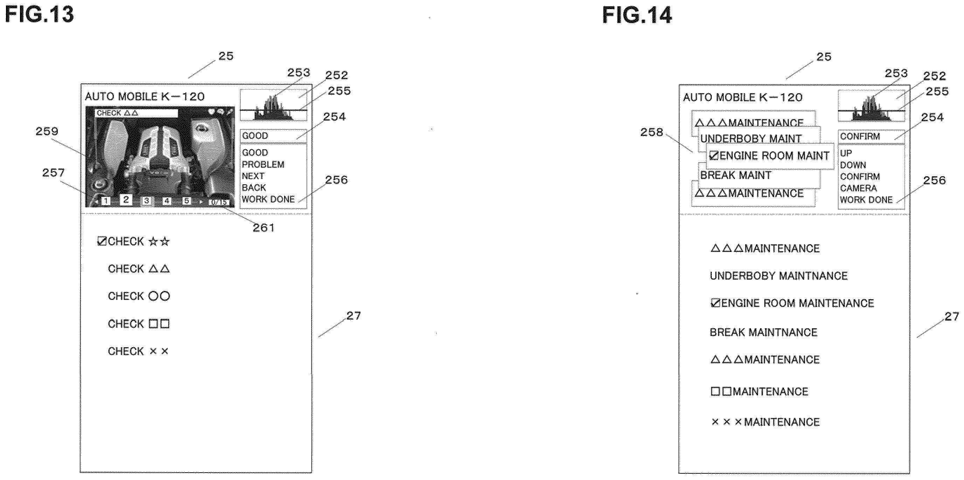

FIG. 13 shows a next process screen. The process number "2" is enlarged. In addition, in the lower region 27, the completed work process is displayed with a tick. The rest of the screen is the same as that in FIG. 12.

During such work, the user can perform the operation by the speech while looking at the screen on the HMD 6. Thus, the user can concentrate on the work in a hand-free condition.

When the process number "5" is completed, the processing returns to step S16, and the CPU 20 selects another work (steps S16, S17).

As described so far, the work can be assisted by using the smartphone 2 and the HMD 6.

Note that the CPU 20 records the work result (whether each of the processes is OK or NG, the cycle time, and the like) in the non-volatile memory 28.

### 1.4 Other

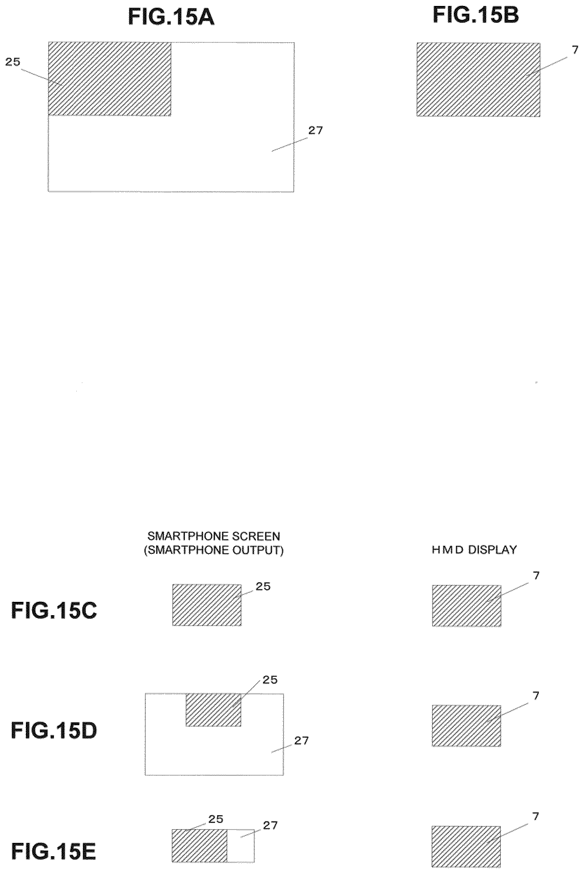

(1) In the above embodiment, the terminal program 32, which is installed on the smartphone 2, executes the processing. However, a program may be installed on a server system (not shown), and the user may use this program on the smartphone 2 via the Internet. In this case, information is aggregated in the server system. Thus, plural persons are engaged in the work, each of them can understand which work is done by whom by using the smartphone 2.
   FIG. 14 shows a screen example in this case. The work name with the tick in front in the lower region 27 and the selection region 258 is the completed work (including the work completed by the other user), and the work names with a black dot is currently done by the other user.
(2) In the above embodiment, the example in which the display linking system is used to assist with the work has been described. However, the above example is one example. In the case where the display linking system is used to display the display contents in the overlapping display region 25 of the smartphone 2 on the HMD 6, the display linking system can be used for extensive purposes. For example, the lower region 27 can be used as a region in which the operation is performed, and the overlapping display region 25 is used as a region in which the processing result and the like are displayed.
(3) In the above embodiment, the smartphone 2 is used. However, a tablet may be used.
(4) In the above embodiment, the screen of the smartphone 2 is fixed to be vertically long. However, as shown in FIG. 15A, the screen of the smartphone 2 may be fixed to be horizontally long, and a part thereof (an upper right portion, an upper left portion, a lower right portion, a lower left portion, a middle portion, or the like thereof) may be set as the overlapping display region 25 with the HMD 6. In the drawing, an upper left region of the screen of the smartphone 2 is set as the overlapping display region 25 and is displayed in the display region 7 of the HMD 6. A remaining region 27 corresponds to the lower region 27 in the above embodiment.
   In this case, the output image data of the smartphone 2 is the same as that shown in FIG. 15A. Accordingly, the converter 4 clips the predetermined region 25 and generates the HMD display data.
   In addition, the vertical/horizontal automatic switching function may not be turned off. The screen of the smartphone 2 may be converted and output as shown in FIGs. 7A, 7B, 7C when being the vertical screen or may be converted and output as shown in FIGs. 15A, 15B (and FIGs. 15C, 15D, 15E described below) when being the horizontal screen. In this case, information on the current mode (the vertical screen mode or the horizontal screen mode) may be output from the input/output port 24 of the smartphone 2, and the converter 4 may receive this information to recognize the current mode.
   FIGs. 15C, 15D, 15E show variations of the display screen (the output from the smartphone 2 is the same as this) and variations of the HMD display screen at the time when the smartphone 2 has the horizontal screen. In FIG. 15C, the screen of the smartphone 2 and the screen of the HMD 6 are the same (the entire screens are the overlapping display regions). In FIG. 15D, an upper central portion of the screen of the smartphone 2 is the overlapping display region 25, and the remaining region 27 corresponds to the lower region 27 in the above embodiment. In FIG. 15E, a left portion of the screen of the smartphone 2 is the overlapping display region 25, and the remaining region 27 corresponds to the lower region 27 in the above embodiment.
   These constitute one example, and any portion of the horizontal screen of the smartphone 2 can be displayed on the HMD 6.
(5) In the above embodiment, the HMD 6 only displays the overlapping display region 25 of the smartphone screen. However, the HMD 6 may display the same screen (the screen including the region 27) as the smartphone screen. In addition, these may be switched by a switch or the like.
(6) In the above embodiment, the converter 4 includes the HDMI converter 46. However, the converter 4 may retrieve the output image data from the input/output port 24 of the smartphone 2 via an HDMI converter (not shown). In this case, the converter 4 does not need the HDMI converter 46.
(7) In the above embodiment, the remaining region 27 is configured to be larger than the overlapping display region 25. However, the overlapping display region 25 may be configured to be larger than the remaining region 27.
(8) In the above embodiment, the converter 4 clips the overlapping display region 25. However, the application installed on the smartphone 2 may clip the overlapping display region 25. In this case, the output image data, which is generated by clipping the overlapping display region 25 only, may be output from the input/output port 24 and provided to the HMD 6 via the HDMI converter.
(9) In the above embodiment, the HMD 6 only displays the overlapping display region 25. However, the HMD 6 may display not only the overlapping display region 25 but also the remaining region 27 (the lower region 27). When a personal computer or the like that does not have a screen is connected to the HMD 6, such a display method is preferred.
(10) In the above embodiment, the converter 4 is connected to the smartphone 2 and the HMD 6 by the cables 52, 54. However, the converter 4 may be connected thereto via wireless communication such as Bluetooth.
(11) In the above example, the HDMI data has been described as the example. However, the invention can also be applied to other image systems.
(12) In the above embodiment, the part of the screen of the smartphone 2 is displayed on the HMD 6. However, the part of the whole of the screen that should originally be displayed on the smartphone 2 may only be displayed on the HMD 6, and the touch display 22 of the smartphone 2 may be used as the touchpad. That is, the cursor displayed on the HMD 6 may be moved or operated through an operation using a finger (or a stylus) on the touch display 22.
(13) The above embodiment and the other examples can be combined with the other embodiment unless contrary to the nature thereof.

### 2. Second Embodiment

### 2.1 Overall Configuration

In the first embodiment, it is recognized in advance what type of the output image data is output from the input/output port 24 of the smartphone 2. However, even in the same vertical screen (horizontal screen) mode, there is a case where the output image data differs depending on models of the smartphone 2. In this case, the overlapping display region 25 is not correctly displayed on the HMD 6 depending on the models. In view of this, in this embodiment, initial setting is performed during activation of the terminal program 32. In this way, even when the output image data differs depending on the models as described above, correct display linking is realized.

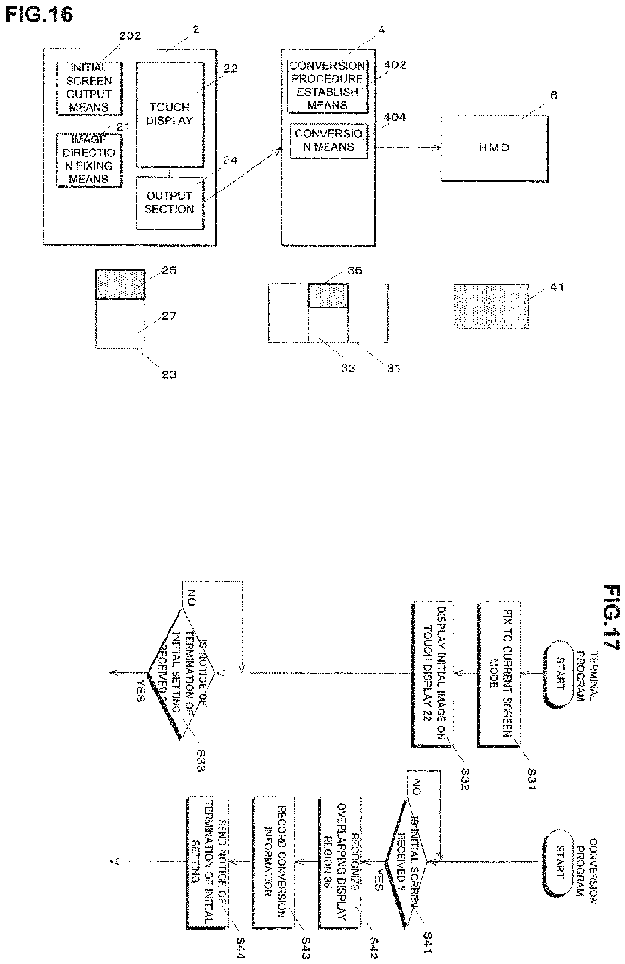

FIG. 16 is a functional block diagram of a display linking system according to a second embodiment of the invention. The smartphone 2 as the mobile terminal includes the touch display 22 that allows touch input. The smartphone 2 includes the acceleration sensor (not shown) that detects the direction of gravity, and switches between the vertically-long image data and the horizontally-long image data for the display in accordance with the direction of the screen.

An initial image output means 202 displays an initial image on the touch display 22. With the initial image, the overlapping display region 25 can be identified in accordance with the direction of the current image. For example, in the case of the vertical image mode, an initial image 23 is displayed as shown in FIG. 16. In the initial image 23, the overlapping display region 25 is colored with gray, an outer frame thereof is surrounded by bold lines, and the lower region 27 is colored with white. In this way, output image data 31 as shown in the drawing is output from the input/output port 24, for example.

The image direction fixing means 21 fixes an image direction in the mode at the time when the above initial image is output.

A conversion procedure establishment means 402 in the converter 4 receives the output image data 31 and recognizes the grayed overlapping display region 35, which is surrounded by the bold lines, therefrom. For example, the conversion procedure establishment means 402 identifies coordinates (X1, Y1) at an upper left corner and coordinates (X2, Y2) at a lower right corner of the overlapping display region 35 with an upper left corner of the output image data 31 being an origin (0, 0). Here, one pixel is set as a unit of the coordinates. Furthermore, the conversion procedure establishment means 402 records the coordinates (X1, Y1) at the upper left corner and the coordinates (X2, Y2) at the lower right corner as information for clipping the overlapping display region 35. In this way, the initial setting is ended.

The converter 4 transmits a fact that the initial setting is ended to the smartphone 2. The smartphone 2 executes the processing by the terminal program 32. The processing at this time onward is the same as that in the first embodiment.

According to this embodiment, the conversion procedure is automatically established in accordance with the mode of the output image data 31, which depends on the model. Thus, the appropriate display linking can be realized.

### 2.2 System Configuration · Hardware Configuration

The system configuration is the same as that shown in FIG. 2. The hardware configuration of the smartphone 2 is the same as that shown in FIG. 3. Note that a speech recognition program is installed on the non-volatile memory 28. The speech recognition program recognizes the speech input through the microphone 37 as the text and identifies an instruction command. The hardware configuration of the converter 4 is the same as that shown in FIG. 4.

### 2.3 Initial Setting Processing

In this embodiment, initial setting processing is executed when the terminal program 32 is activated. This initial setting processing may be a part of the terminal program 32 or may separately be provided from the terminal program 32.

FIG. 17 is a flowchart during the initial setting of the terminal program 32 and the conversion program 50. The CPU 20 in the smartphone 2 (hereinafter may be abbreviated as the smartphone 2) first turns off the vertical/horizontal automatic switching function and fixes the touch display 22 in the current screen mode (step S31). The CPU 20 in the smartphone 2 fixes the touch display 22 in the vertical screen mode when the current screen mode is the vertical screen mode, and is fixed in the horizontal screen mode when the current screen mode is the horizontal screen mode.

Next, the smartphone 2 generates the initial image and displays the initial image on the touch display 22 (step S32). FIG. 18A displays an example of the initial image 23 that is displayed on the touch display 22. The initial image 23 is configured to include the overlapping display region 25 and the lower region 27. The lower region 27 is white, and the overlapping display region 25 is gray. A region line 251 is drawn from the upper left corner to the lower right corner of the overlapping display region 25.

The output image data 31, which is output from the input/output port 24 of the smartphone 2, differs depending on the models. For example, as shown in FIG. 18B, a blank region is provided at both ends of a central region 33, and the entire output image data 31 is output as the horizontally-long image. Alternatively, as shown in FIG. 18C, the initial image 23 is output as is as the vertically-long image.

In this embodiment, regardless of the mode of the output image data 31, the display linking with the HMD 6 can correctly be realized. The CPU 40 in the converter 4 (hereinafter may be abbreviated as the converter 4) determines whether the output image data 31 of the initial screen is received (step S41). Once receiving the output image data 31, the converter 4 recognizes the overlapping display region 35 from the output image data 31 (step S42).

Here, the converter 4 finds the gray region and acquires coordinates at an upper left end and a lower right end of the region line 251 drawn therein. The coordinates at the upper left corner of the output image data 31 is set to (0, 0), and the one pixel is set as one coordinate element. Then, the coordinates are calculated. For example, in the case where the output image data 31 is horizontally long as shown in FIG. 18B and has 1920 pixels x 1080 pixels, the coordinates at the lower right corner is (1080, 1920). Accordingly, in the case of FIG. 18B, the upper left corner (0, 640) and the lower right corner (160, 1280) are extracted as a position of the overlapping display region 35. In the case of FIG. 18C (the lower right coordinates of the output image data 31 are (1920, 1080)), the upper left end (0, 0) and the lower right end (640, 1080) of the region line 251 are extracted as the position of the overlapping display region 35.

As described above, both in the case of FIG. 18B and the case of FIG. 18C, the position of the overlapping display region 35 can be identified by the coordinates of the upper left end and the lower right end of the region line 251.

Note that, in the above description, the position of the overlapping display region 35 is indicated by the coordinates with the one pixel being the one unit. However, by setting the lower right corner of the output image data 31 as (100, 100), the position of the overlapping display region 35 may be indicated by normalized coordinates of the overlapping display region 35.

The converter 4 records the coordinates (the upper left corner, the lower right corner) of the overlapping display region 35, which are extracted as described above, in the non-volatile memory 44 (step S43). Accordingly, in the processing onward, the converter 4 clips the overlapping display region 35 on the basis of these coordinates and generates the HMD display data 41.

Once the initial setting that has been described so far is ended, the converter 4 sends notice of the termination of the initial setting to the smartphone 2 via the cable 52 (step S44). When receiving this, the smartphone 2 executes the following processing (for example, the processing in FIG. 8 (except for step S11)).

### 2.4 Other

(1) In the above embodiment, the description has been made on the system that automatically handles the difference in the clipping position of the overlapping display region 35 caused by the model difference. However, also for the same model (the same smartphone), the system can be used to automatically handle the difference in the clipping position of the overlapping display region 35 caused by whether the screen is the vertical screen or the horizontal screen.
(2) In the above embodiment, the region line 251 is used to recognize the overlapping display region 35. However, another special mark, another frame, or the like may be used to recognize the overlapping display region 35.
(3) In the above embodiment, the screen mode is set to that at the time when the initial image is output. However, regardless of the direction of the current screen, the screen mode may be set to the vertical screen mode or the horizontal screen mode.
   In addition, the screen mode may not be fixed (the vertical/horizontal automatic switching function is not turned off) but be switched between the vertical screen mode and the horizontal screen mode in accordance with the direction of the screen. In this case, the initial setting processing is executed every time the screen mode is switched.
(4) In the above embodiment, the smartphone 2 outputs the initial screen, from which the overlapping display region 35 can be distinguished. Then, on the basis of the initial screen, the coordinates of the overlapping display region 35 are confirmed and extracted. However, the user may input the model of the smartphone 2 and the model of the HMD 6 (inputs those in the smartphone 2 and sends those to the converter 4), a table that indicates the coordinate position of the overlapping display region 35 on the basis of the combination of the models may be prepared, and the overlapping display region 35 may be clipped on the basis of this. In this case, because the clipping position differs by the vertical screen and the horizontal screen, the screen mode is preferably fixed to one of the vertical screen and the horizontal screen. Note that the converter 4 may automatically acquire the models of the smartphone 2 and the HMD 6.
   In addition, the coordinate position of the overlapping display region 35 in each of the vertical screen and the horizontal screen may be recorded in a table, whether the screen is the vertical screen or the horizontal screen may be acquired from the smartphone 2, and the overlapping display region 35 may thereby be clipped.
   Furthermore, in the case where either one of the model of the smartphone 2 and the HMD 6 is fixed, the coordinate position of the overlapping display region 35 may be recorded in the table on the basis of the model of the other.
(5) In the above embodiment, in step S44, the converter 4 sends the notice of the termination of the initial setting, the smartphone 2 receives the notice, and the processing proceeds to the next step. However, the smartphone 2 may not receive the notice from the converter 4 and may determine that the initial setting is terminated after a lapse of specified duration since the initial image is output. Then, the processing may proceed to the next step.
(6) In the above embodiment, the smartphone 2 outputs the initial screen, from which the overlapping display region 35 can be distinguished. Then, on the basis of the initial screen, the coordinates of the overlapping display region 35 are confirmed and extracted. However, as shown in FIG. 18D, a black image region 37 that is located on both right and left sides of the output image of the smartphone 2 may be recognized as a no-image region. In this case, the regions 35, 33 may be displayed on the HMD 6 as is. Alternatively, a ratio of the overlapping display region 35 to the region 33 may be defined in advance, and only the overlapping display region 35 may be displayed on the HMD 6.
(7) In the above embodiment, the converter 4 executes the conversion procedure establishment processing and the conversion processing. However, the smartphone 2 may execute these types of the processing.
(8) The above embodiment and the other examples can be combined with the other embodiment unless contrary to the nature thereof.

## Claims

1. A display linking system comprising:
a mobile terminal that includes: a touch display that allows touch input; and an output section that outputs vertically-long display data displayed on the touch display as external output display data corresponding to a horizontally-long HMD screen;
a converter that receives the external output display data from the output section and generates horizontally-long HMD display data to be displayed on a head-mounted display (HMD); and
the head-mounted display that is connected to the converter and receives and displays the HMD display data,
wherein
a partial region that is a specified partial region of the touch display and that corresponds to the horizontally-long HMD screen is set as an overlapping display region, and
the converter extracts display data of the overlapping display region from a region that corresponds to the vertically-long display data included in a central portion of the received external output display data so as to generate the HMD display data.

2. A converter that receives external output display data from a mobile terminal and generates horizontally-long HMD display data to be displayed on a head-mounted display (HMD), the mobile terminal outputting vertically-long display data that is displayed on a touch display as the external output display data corresponding to a horizontally-long HMD screen, wherein
a partial region that is a specified partial region of the touch display and that corresponds to the horizontally-long HMD screen is set as an overlapping display region, and
the converter extracts display data of the overlapping display region from a region that corresponds to the vertically-long display data included in a central portion of the received external output display data so as to generate the HMD display data.

3. The display linking system according to claim 1 or the converter according to claim 2, wherein
the mobile terminal includes a fixing means that fixes a switching means switching the touch display between vertically-long display and horizontally-long display to the vertically-long display.

4. The display linking system or the converter according to any one of claims 1 to 3, wherein
in the touch display of the mobile terminal, display for the touch input is not provided in the overlapping display region.

5. A mobile terminal comprising:
a touch display that allows touch input;
an output means that outputs vertically-long display data displayed on the touch display as external output display data corresponding to a horizontally-long HMD screen; and
a conversion means that receives the external output display data from the output means and generates horizontally-long HMD display data to be displayed on a head-mounted display (HMD), wherein
a partial region that is a specified partial region of the touch display and that corresponds to the horizontally-long HMD screen is set as an overlapping display region, and
the conversion means extracts display data of the overlapping display region from a region that corresponds to the vertically-long display data included in a central portion of the received external output display data so as to generate the HMD display data.

6. A conversion program for realizing a conversion means by a computer, the conversion program being used to make the computer function as the conversion means that receives external output display data from an output means and generates horizontally-long HMD display data to be displayed on a head-mounted display (HMD), the output means outputting vertically-long display data that is displayed on a touch display as the external output display data corresponding to a horizontally-long HMD screen, wherein
a partial region that is a specified partial region of the touch display and that corresponds to the horizontally-long HMD screen is set as an overlapping display region, and
the conversion means extracts display data of the overlapping display region from a region that corresponds to the vertically-long display data included in a central portion of the received external output display data so as to generate the HMD display data.

7. The terminal according to claim 5 or the program according to claim 6, wherein
the conversion means fixes a switching means switching the touch display between vertically-long display and horizontally-long display to the vertically-long display.

8. The terminal or the program according to any one of claims 5 to 7, wherein
in the touch display of the mobile terminal, display for the touch input is not provided in the overlapping display region.

9. A display linking system comprising:
a mobile terminal that includes: a touch display that allows touch input; and an output section that externally outputs display data displayed on the touch display as external output display data;
a converter that receives the external output display data from the output section and generates HMD display data to be displayed on a head-mounted display (HMD); and
the head-mounted display that is connected to the converter and receives and displays the HMD display data,
wherein
a partial region that is a specified partial region of the touch display and that corresponds to an HMD screen is set as an overlapping display region, and
the converter converts the external output display data to the HMD display data on the basis of a combination of a model of the mobile terminal and a model of the head-mounted display, each of which is connected thereto.

10. A converter that receives external output display data from a mobile terminal and generates HMD display data to be displayed on a head-mounted display (HMD) screen, the mobile terminal outputting display data that is displayed on a touch display as the external output display data, wherein
a partial region that is a specified partial region of the touch display and that corresponds to the HMD screen is set as an overlapping display region, and
the converter converts the external output display data to the HMD display data on the basis of a combination of a model of the mobile terminal and a model of the head-mounted display, each of which is connected thereto.

11. The system according to claim 9 or the converter according to claim 10, wherein
in the case where either one of the model of the connected mobile terminal and the connected head-mounted display is determined in advance, the external output display data is converted to the HMD display data on the basis of the model of the other.

12. The system or the converter according to any one of claims 9 to 11, wherein
in the case where the display data becomes vertically-long display data due to the combination of the model of the mobile terminal and the model of the head-mounted display and the external output display data corresponds to the horizontally-long HMD screen as a whole that includes the vertically-long display data in a central portion thereof,
of a region that corresponds to the vertically-long display data included in the central portion of the received external output display data, the converter extracts display data of the overlapping display region so as to generate the HMD display data.

13. A mobile terminal comprising:
a touch display that allows touch input;
an output means that externally outputs display data displayed on the touch display as external output display data; and
a conversion means that receives the external output display data from the output means and generates HMD display data to be displayed on a head-mounted display (HMD), wherein
a partial region that is a specified partial region of the touch display and that corresponds to an HMD screen is set as an overlapping display region, and
the conversion means converts the external output display data to the HMD display data on the basis of a combination of a model of the mobile terminal and a model of the head-mounted display, each of which is connected thereto.

14. A conversion program for realizing a conversion means by a computer, the conversion program being used to make the computer function as the conversion means that receives external output display data from an output means and generates HMD display data to be displayed on a head-mounted display (HMD), the output means externally outputting display data that is displayed on a touch display as the external output display data, wherein
a partial region that is a specified partial region of the touch display and that corresponds to an HMD screen is set as an overlapping display region, and
the conversion means converts the external output display data to the HMD display data on the basis of a combination of a model of a mobile terminal and a model of the head-mounted display, each of which is connected thereto.

15. The terminal according to claim 13 or the program according to claim 14, wherein
in the case where either one of the model of the mobile terminal and the head-mounted display, each of which is connected thereto, is determined in advance, the external output display data is converted to the HMD display data on the basis of the model of the other.

16. The terminal or the program according to any one of claims 13 to 15, wherein
in the case where the display data becomes vertically-long display data due to the combination of the model of the mobile terminal and the model of the head-mounted display and the external output display data becomes HDMI data that includes that corresponds to the horizontally-long HMD screen as a whole including the vertically-long display data in a central portion thereof,
the converter extracts display data of the overlapping display region from a region that corresponds to the vertically-long display data included in the central portion of the received HDMI data so as to generate the HMD display data.
